# EUROPEAN PATENT SPECIFICATION

(11) **EP 2 884 558 B1**
(45) Date of publication and mention of the grant of the patent: **31.01.2018**
(21) Application number: 14196047.6
(22) Date of filing: 03.12.2014
(51) Int. Cl.: H01M 2/02, B32B 7/12, H01M 2/30, B32B 15/08, B32B 15/20

(54) **Rechargeable battery**
Wiederaufladbare Batterie
Batterie rechargeable

(30) Priority: 12.12.2013 KR 20130154796
(43) Date of publication of application: 17.06.2015
(73) Proprietor: Samsung SDI Co., Ltd., Yongin-si, Gyeonggi-do (KR)
(72) Inventor: Seong, Jae-Il, Gyeonggi-do (KR)
(74) Representative: Mounteney, Simon James

(56) References cited:
- EP-A1- 1 498 964
- KR-A- 1999 022 813
- KR-A- 20130 119 556
- US-A1- 2003 017 390
- US-A1- 2008 241 654
- US-A1- 2010 167 116
- US-A1- 2011 151 284
- US-A1- 2013 308 282

## Description

### BACKGROUND

### 1. Field

The present invention relates generally to a rechargeable battery having a curved case.

### 2. Description of the Related Art

A rechargeable battery is a battery which repeatedly performs charging and discharging, unlike a primary battery. A small-capacity rechargeable battery is typically used in small portable electronic device, such as a mobile phone, a notebook computer, or a camcorder. A large-capacity rechargeable battery is typically used as a motor driving power supply, such as for an electric bicycle, a scooter, an electric vehicle, or a fork lift.

A rechargeable battery typically includes: an electrode assembly in which a positive electrode and a negative electrode are stacked with a separator disposed therebetween, a case having the electrode assembly and an electrolytic solution received therein, a cap plate closing an opening on one side of the case, and an electrode terminal mounted on the cap plate to be electrically connected to the electrode assembly. The electrode assembly is often wound in a jelly roll form.

An electronic device may have a curved shape and thus require a rechargeable battery having a curved shape. For example, the rechargeable battery may be formed in a state in which the case is curved to one side. In this case, the case may have a concavely curved portion and a convexly curved portion.

EP 1 498 964 A1 and KR 1999022813A each disclose a rechargeable battery having a curved case.

KR 20130119556A discloses a battery with a reinforcing member.

When a rechargeable battery having such a case is charged, the concavely curved portion, which is curved within the case, may not maintain the curved state and may be expanded. That is, the entire thickness of the rechargeable battery which is set at an interval between the concavely curved portion and the convexly curved portion of the case may be increased by deformation of the concavely curved portion.

The above information disclosed in this Background section is only for enhancement of understanding of the background of the described technology and therefore it may contain information that does not form the prior art that is already known in this country to a person of ordinary skill in the art.

### SUMMARY

The present invention sets out to provide a rechargeable battery that is able to maintain a curved state of its case by minimizing a deformation of the case.

Accordingly, the invention provides a rechargeable battery according to Claim 1.

Optional features of the invention are set out in Claims 2 to 14.

As set forth above, according to embodiments of the invention, it is possible to minimize the deformation of the case which is inflated by the internal pressure of the rechargeable battery at the time of charging and discharging by bonding the reinforcing plate to the first curved portion concavely curved portion curved toward the center of the electrode assembly in the case. Therefore, the rechargeable battery may firmly maintain the curved state of the case.

### BRIEF DESCRIPTION OF THE DRAWINGS

FIG. 1 shows an example of a rechargeable battery.
FIG. 2 is a cross-sectional view taken along line II-II of FIG. 1.
FIG. 3 is a transversal cross-sectional view of a case taken along line III-III of FIG. 1.
FIG. 4 is an exploded perspective view of a rechargeable battery according to a first embodiment of the present invention.
FIG. 5 is a front view of the case used in the rechargeable battery of FIG. 4.
FIG. 6 is a transversal cross-sectional view of the case taken along line VI-VI of FIG. 5.
FIG. 7 is a front view of a case used in a rechargeable battery according to a second embodiment of the present invention.
FIG. 8 is a cross-sectional view taken along line VII-VII of FIG. 7.
FIG. 9 is a front view of a case used in a rechargeable battery according to a third embodiment of the present invention.
FIG. 10 is a front view of a case used in a rechargeable battery according to a fourth embodiment of the present invention.
FIG. 11 is a front view of a case used in a rechargeable battery according to a fifth embodiment of the present invention.
FIG. 12 is a transversal cross-sectional view of a case used in a rechargeable battery according to a sixth embodiment which is not according to the present invention.
FIG. 13 is a transversal cross-sectional view of a case used in a rechargeable battery according to an seventh embodiment which is not according to the present invention.
FIG. 14 is a transversal cross-sectional view of a case used in a rechargeable battery according to a eighth embodiment which is not according to the present invention.
FIG. 15 is a longitudinal cross-sectional view of a case used in a rechargeable battery according to a ninth embodiment which is not according to the present invention.

### DETAILED DESCRIPTION

The present invention will be described more fully hereinafter with reference to the accompanying drawings, in which embodiments of the invention are shown. As those skilled in the art would realize, the described embodiments may be modified in various different ways, all without departing from the scope of the present invention as claimed in the appended claims. The drawings and description are to be regarded as illustrative in nature and not restrictive. Like reference numerals designate like elements throughout the specification.

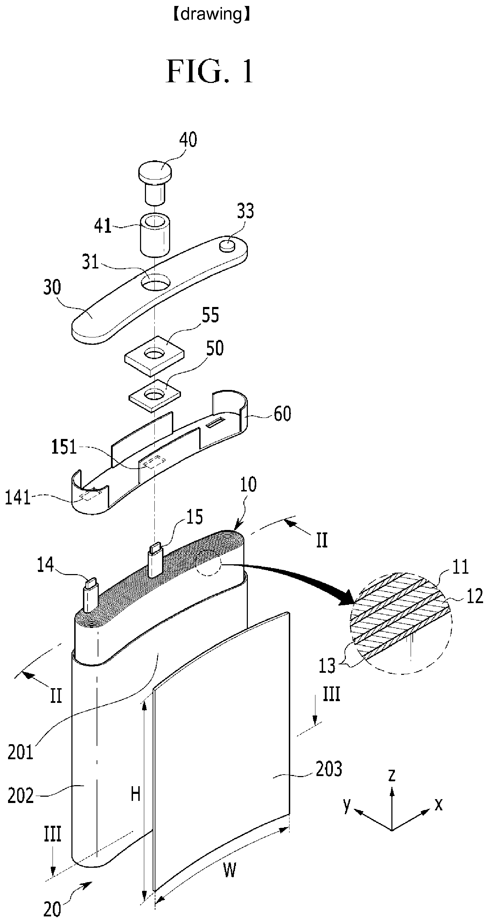

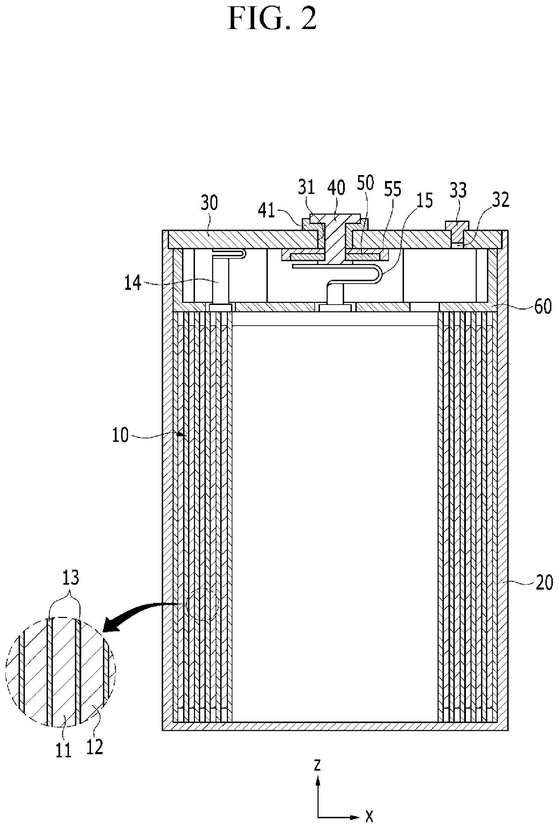

FIG. 1 is an exploded perspective view of an example of a rechargeable battery and FIG. 2 is a cross-sectional view taken along line II-II of FIG. 1.

Referring to FIGS. 1 and 2, the rechargeable battery includes an electrode assembly 10 which charges and discharges a current, a case 20 which receives the electrode assembly 10 and an electrolytic solution, a cap plate 30 which closes an opening of an upper end of the case 20, and an electrode terminal 40 which is mounted in a terminal hole 31 of the cap plate 30 and is electrically connected to the electrode assembly 10.

Further, the rechargeable battery further includes a terminal plate 50 which electrically connects the electrode terminal 40 to the electrode assembly 10 and an insulating case 60 which is mounted between the cap plate 30 and the electrode assembly 10.

Although not illustrated, the electrode assembly may be inserted and assembled into a square-shaped case and then the rechargeable battery may be entirely curved by warpage machining. For convenience, this example of a rechargeable battery in which the case 20 is formed in a curved square shape and the electrode assembly 10 is formed to be curved in a state corresponding to the case 20 to fit the electrode assembly 10 into the case 20.

The electrode assembly 10 has a shape corresponding to an internal space of the curved square-shaped case 20 so that the electrode assembly 10 may be accommodated in the case 20. In this example, the case 20 includes a curved portion 201 corresponding to a wide curved surface (xz plane side) of the electrode assembly 10 and side portions 202 which are formed at respective sides of the curved portion 201 and correspond to sides (yz plane sides) of the electrode assembly 10

The curved case 20 enables the insertion of the curved electrode assembly 10 and the curved insulating case 60 through the opening disposed at the upper portion thereof and enables the coupling of the curved cap plate 30 with the opening, and is formed of a conductor to receive the inserted electrode assembly 10 and serve as the electrode terminal. For example, the case 20 may be made of aluminum or aluminum alloy.

The electrode assembly 10 is formed by stacking a positive electrode 11 and a negative electrode 12 with a separator 13 that is formed from an electrical insulating material therebetween and by winding the stack into a jelly roll form. The electrode assembly 10 includes a positive electrode lead tab 14 which is connected to the positive electrode 11 and a negative electrode lead tab 15 which is connected to the negative electrode 12.

The positive electrode lead tab 14 is connected to a lower surface of the cap plate 30 by welding and the case 20 is electrically connected to the positive electrode 11 of the electrode assembly 10 through the cap plate 30 to serve as a positive electrode terminal.

The negative electrode lead tab 15 is connected to the lower surface of the terminal plate 50 connected to one end of the electrode terminal 40 by welding and the electrode terminal 40 disposed on the terminal hole 31 of the cap plate 30 is electrically connected to the negative electrode 12 of the electrode assembly 10 to serve as a negative electrode terminal.

Although not illustrated, the case may serve as the negative electrode terminal by connecting the negative electrode lead tab to the cap plate and the electrode terminal may serve as the positive electrode terminal by connecting the positive electrode lead tab to the electrode terminal.

The electrode terminal 40 is inserted into the terminal hole 31 of the cap plate 30 via an insulating gasket 41. That is, the insulating gasket 41 electrically insulates the terminal hole 31 from the electrode terminal 40 and forms a sealing structure between the terminal hole 31 and the electrode terminal 40.

The terminal plate 50 is electrically connected to the electrode terminal 40 via an insulating plate 55. That is, the insulating plate 55 electrically insulates the cap plate 30 from the terminal plate 50 and further forms a sealing structure between the cap plate 30 and the terminal plate 50.

The cap plate 30 further includes an electrolytic solution injection opening 32. The electrolytic solution injection opening 32 enables the injection of an electrolytic solution into the case 20 after the case 20 is coupled with the cap plate 30. After the electrolytic solution is injected, the electrolytic solution injection opening 32 is encapsulated with a closure stopper 33.

The insulating case 60 is curved to correspond to the curved case 20 so as to be mounted between the electrode assembly 10 and the terminal plate 50 inside the case 20, thereby electrically insulating the electrode assembly 10 from the terminal plate 50. That is, the insulating case 60 electrically insulates the positive electrode 11 of the electrode assembly 10 from the terminal plate 50 having negative electrode property.

Further, the insulating case 60 is provided with tab holes 141 and 151 through which the positive electrode lead tab 14 and the negative electrode lead tab 15 penetrate. Therefore, the positive electrode lead tab 14 may be connected to the cap plate 30 by penetrating through the tap hole 141 and the negative electrode lead tab 15 may be connected to the terminal plate 50 by penetrating through the tab hole 151.

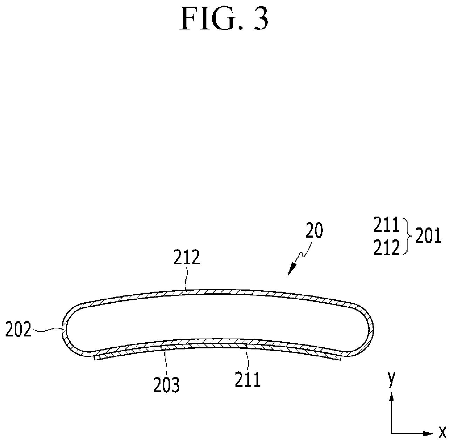

FIG. 3 is a transversal cross-sectional view of the case taken along line III-III of FIG. 1. Referring to FIGS. 1 and 3, the case 20 includes a curved portion 201 in a curved state and a reinforcing plate 203 bonded to the curved portion 201.

The curved portion 201 of the case 20 includes a first curved portion 211 (hereinafter, referred to as "concavely curved portion") which is curved toward a center of the electrode assembly 10 and a second curved portion 212 (hereinafter, referred to as "convexly curved portion") which is curved away from the center thereof.

That is, when viewed from a curvature radius direction in the curved case 20, the concavely curved portion 211 forms an inside portion and the convexly curved portion 212 forms an outside portion of a curvature radius. Further, the concavely curved portion 211 and the convexly curved portion 212 are disposed in parallel with each other and are connected to the side portions 202.

The reinforcing plate 203 is bonded to the concavely curved portion 211 to reinforce strength of the concavely curved portion 211 to suppress a deformation of the concavely curved portion 211 due to inflation by an internal pressure of the rechargeable battery which is generated at the time of charging and discharging.

In more detail, the case 20 is stereometrically formed in a first direction (an x-axis direction or a width direction of the case), a second direction (a z-axis direction or a height direction of the case), and a third direction (a y-axis direction or a thickness direction of the case) which intersect one another and is formed in a state in which an xz plane established in the x-axis direction and the z-axis direction is curved with a curvature of a curvature radius in the y-axis direction.

The reinforcing plate 203 has a width W set in the x-axis direction and a height H in the z-axis direction and includes a curved portion that is curved to correspond to the concavely curved portion 211 and thus bonded to the concavely curved portion 211. In embodiments of the invention the curvature of the reinforcing plate 203 and the concavely curved portion may not be exactly the same.

In this example, the reinforcing plate 203 is made of metal and may be bonded to the concavely curved portion 211 of the case 20 made of metal by welding. if the case 20 and the reinforcing plate 203 are made of the same material, (e.g. aluminum or aluminum alloy) they may have a high bonding strength at the time of the welding.

Further, the reinforcing plate 203 may be made of a resin and in this case, may be bonded to the case 20 made of metal by a thermal fusion method or a hot melting method. Compared a reinforcing plate made of metal, a reinforcing plate made of a resin may further increase electrical insulation at the concavely curved portion 211 of the case 20.

A force due to the internal pressure of the rechargeable battery is applied to the concavely curved portion 211, such that it has a tendency to stretch or expand, but the reinforcing plate 203 bonded to the concavely curved portion 211 may suppress the force to reduce or prevent the concavely curved portion 211 from stretching or expanding. Therefore, deformation of the concavely curved portion 211 in the event that the case 20 is inflated may be prevented.

Although the concavely curved portion 211 occupies almost the entire wall of the case in this example, in embodiments of the invention it could occupy just part of a wall. Similarly, the reinforcing plate may have a size that is larger than or smaller than the concavely curved portion of the case and/or the reinforcing plate may include a curved portion that occupies only a part of the structure of the reinforcing plate.

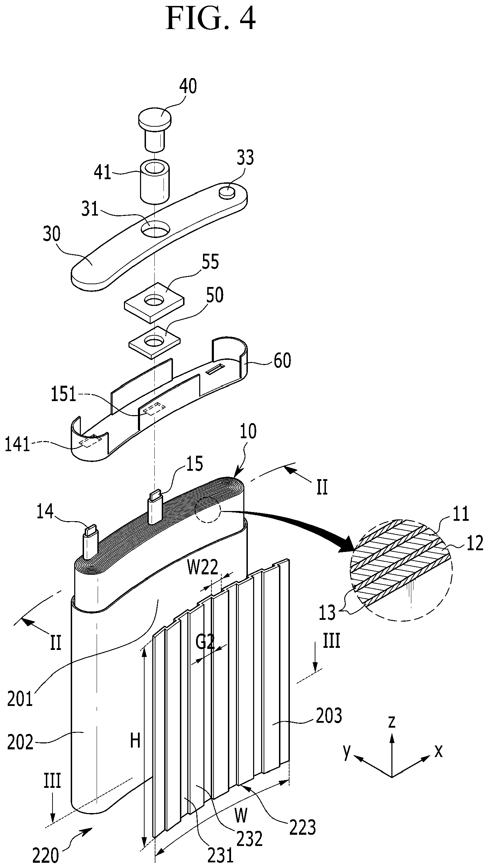

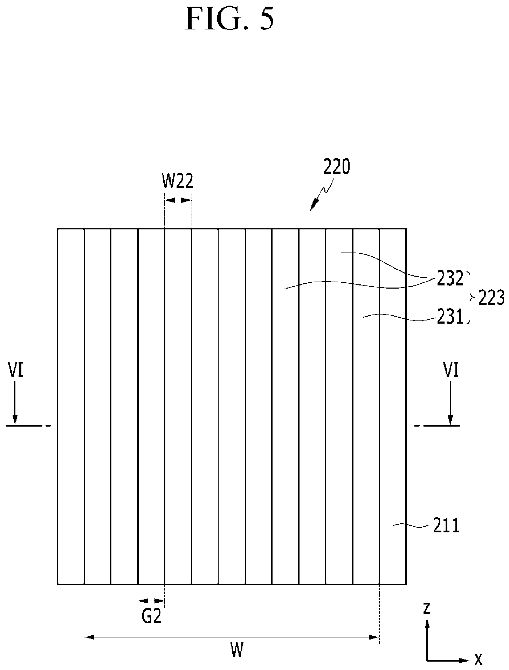

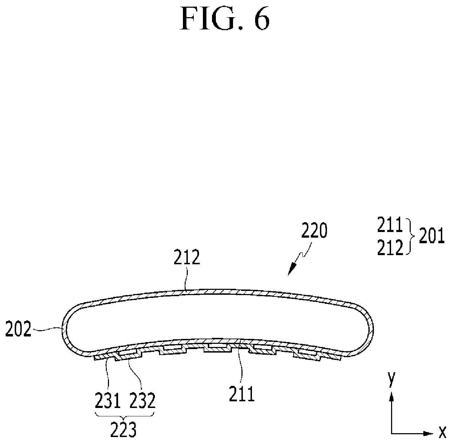

FIG. 4 is an exploded perspective view of a rechargeable battery according to a first embodiment of the present invention, FIG. 5 is a front view of the case used in the rechargeable battery of FIG. 4, and FIG. 6 is a transversal cross-sectional view of the case taken along line VI-VI of FIG. 5.

Referring to FIGS. 4 to 6, according to this embodiment of the present invention, a reinforcing plate 223 of a case 220 includes a plate portion 231 having a width W set in an x-axis direction and a height H set in a z-axis direction to correspond to a concavely curved portion 211 of the case and ribs 232 which protrude in a y-axis direction while being spaced apart from each other, in the x-axis direction and extending along a z-axis direction.

The reinforcing plate 223 is curved to correspond to the curvature of a curvature radius forming the concavely curved portion 211 and is bonded to the concavely curved portion 211 by the plate portion 231. Each rib 232 has a width W22 set in the x-axis direction and extends in the z-axis direction to increase the strength of the concavely curved portion 211.

The ribs 232 are formed along the x-axis direction at an interval G2. That is, the reinforcing plate 233 is bent, and is alternately provided with the plate portions 231 and the ribs 232, following the x-axis direction.

Each rib 232 therefore extends in the z-axis direction, having the width W22 and the interval G2 in the x-axis direction at the concavely curved portion 211, such that the reinforcing plate 223 is bent with the curvature in the y-axis direction and thus is bonded by the plate portion 231. Therefore, the reinforcing plate 223 has a strength which is further increased in the x-axis direction and in the z-axis direction due to the presence of the ribs 232.

A force is applied to the concavely curved portion 211 such that it tends to be stretched or expanded at the concavely curved portion 211 due to the internal pressure of the rechargeable battery, but the reinforcing plate 223 at the concavely curved portion 211 increases the strength of the case 220 and may suppress the force at the concavely curved portion 211. Therefore, the deformation of the concavely curved portion 211 of the case 220 due to inflation of the case 220 may be reduced or prevented.

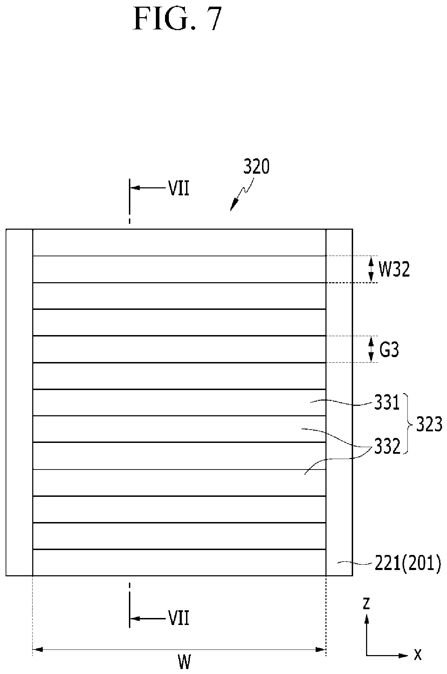

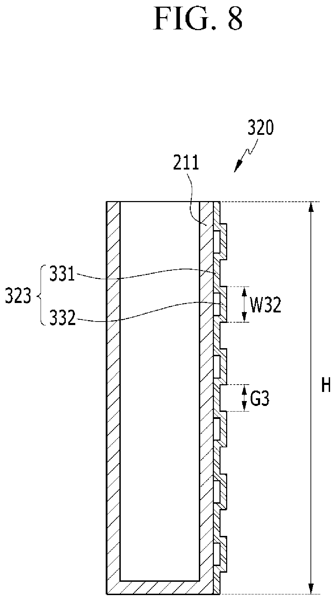

FIG. 7 is a front view of a case used in a rechargeable battery according to a second embodiment of the present invention and FIG. 8 is a cross-sectional view taken along line VII-VII of FIG. 7.

Referring to FIGS. 7 and 8, according to this embodiment of the present invention, a reinforcing plate 323 of a case 320 includes a plate portion 331 having a width W set in an x-axis direction and a height H set in a z-axis direction to correspond to the concavely curved portion 211, and ribs 332 which protrude in a y-axis direction while being spaced apart from each other, following the z-axis direction and extend along the x-axis direction, on the plate portion 331.

The reinforcing plate 323 is curved to correspond to the curvature of a curvature radius forming the concavely curved portion 211 and is bonded to the concavely curved portion 211 by the plate portion 331. The ribs 332 each have a width W32 set in the z-axis direction and extend in the x-axis direction in order to increase the strength of the concavely curved portion 211.

The ribs 332 are provided at an interval G3 in the z direction. That is, the reinforcing plate 323 is bent and alternately provided with plate portions 331 and the ribs 332 following the z-axis direction.

That is, the ribs 332 extend in the x-axis direction, having the width W32 and the interval G3 in the z-axis direction at the concavely curved portion 211, such that the reinforcing plate 323 is bent with the curvature in the y-axis direction and thus is bonded by the plate portion 331. Therefore, the reinforcing plate 323 has a strength which is reduced and increased in the z-axis direction, having the same two kinds of strength in the x-axis direction depending on the presence and absence of the rib 332.

The concavely curved portion 211 is applied with the action force to be stretched in the state in which the concavely curved portion 211 is curved by the internal pressure of the rechargeable battery and the strength distribution set at the concavely curved portion 211 by the reinforcing plate 323 may suppress the action force stretching the concavely curved portion 211. Therefore, the deformation of the concavely curved portion 211 in the event that the case 320 is inflated may be prevented.

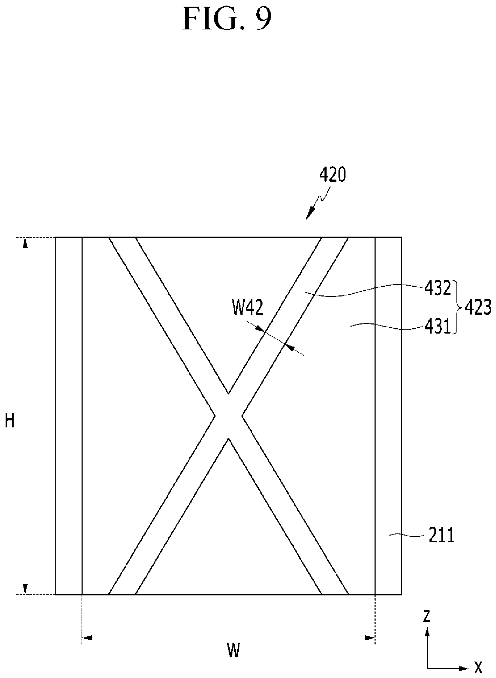

FIG. 9 is a front view of a case used in a rechargeable battery according to a third embodiment of the present invention. Referring to FIG. 9, according to this embodiment of the present invention, a reinforcing plate 423 of a case 420 includes a plate portion 431 having a width W set in an x-axis direction and a height H set in a z-axis direction to correspond to the concavely curved portion 211 and ribs 432 which protrude in the y-axis direction and extend in intersecting diagonal on the plate portion 431. Although the ribs intersect in a generally central part of the reinforcing plate 423 in this embodiment, they may intersect in other regions.

The reinforcing plate 423 is curved to correspond to the curvature of a curvature radius forming the concavely curved portion 211 and thus is bonded to the concavely curved portion 211 by the plate portion 431. The ribs 432 extend in directions intersecting each other, having a width W42 set in a direction intersecting the extending direction to increase the strength of the concavely curved portion 211.

The concavely curved portion 211 is applied with the action force to be stretched in the state in which the concavely curved portion 211 is curved by the internal pressure of the rechargeable battery and the strength distribution set at the concavely curved portion 211 by the reinforcing plate 423 may suppress the action force stretching the concavely curved portion 211. Therefore, the deformation of the concavely curved portion 211 in the event that the case 420 is inflated may be prevented.

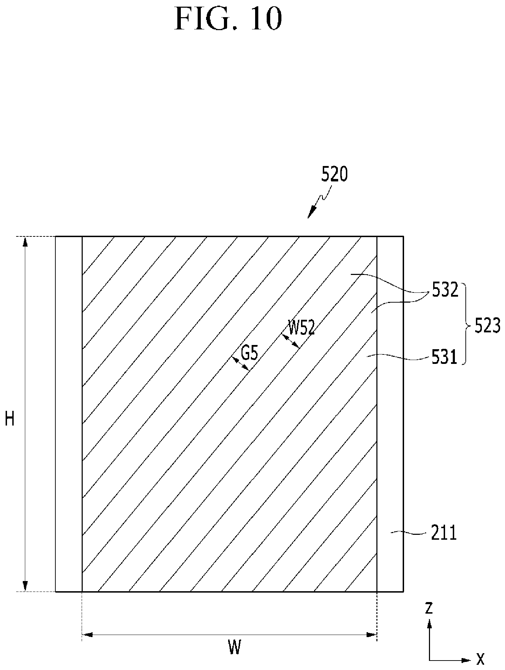

FIG. 10 is a front view of a case used in a rechargeable battery according to a fourth embodiment of the present invention. Referring to FIG. 10, according to this embodiment of the present invention, a reinforcing plate 523 of a case 520 includes a plate portion 531 having a width W set in an x-axis direction and a height H set in a z-axis direction to correspond to the concavely curved portion 211 and a plurality of ribs 532 which protrude in the y-axis direction and extend diagonally in a direction intersecting the x-axis direction and the z-axis direction, on the plate portion 531.

The reinforcing plate 523 is curved to correspond to the curvature of a curvature radius forming the concavely curved portion 211 and thus is bonded to the concavely curved portion 211 by the plate portion 531. The ribs 532 extend in a diagonal direction intersecting the x-axis direction and the z-axis direction, having a width W52 set on an xz plane to increase the strength of the concavely curved portion 211.

Further, the ribs 532 are formed along a direction intersecting the diagonal direction at an interval G5. That is, the reinforcing plate 523 is bent, and thus may be alternately provided with the plate portion 531 and the rib 532 in the direction intersecting the diagonal direction.

The ribs 532 extend in the diagonal direction, having the width W52 and the interval G5 in the direction intersecting the diagonal line at the concavely curved portion 211, such that the reinforcing plate 523 is bent with the curvature in the y-axis direction and thus is bonded by the plate portion 531. Therefore, the reinforcing plate 523 has a strength which is reduced and increased in the direction intersecting the diagonal direction, having the same two kinds of strength in the diagonal direction depending on the presence and absence of the rib 532.

The concavely curved portion 211 is applied with an action force to be stretched in the state in which the concavely curved portion 211 is curved by the internal pressure of the rechargeable battery and a strength distribution set at the concavely curved portion 211 by the reinforcing plate 523 may suppress the action force stretching the concavely curved portion 211. Therefore, the deformation of the concavely curved portion 211 in the event that the case 520 is inflated may be prevented.

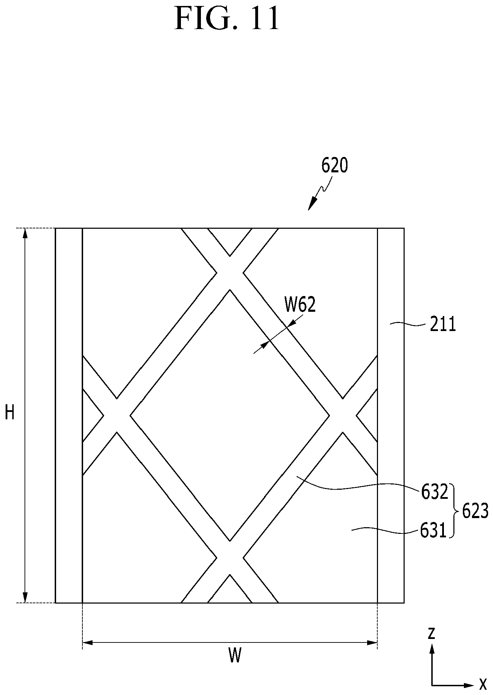

FIG. 11 is a front view of a case used in a rechargeable battery according to a fifth embodiment of the present invention. Referring to FIG. 11, according to this embodiment of the present invention, a reinforcing plate 623 of a case 620 includes a plate portion 631 having the width W set in the x-axis direction and the height H set in the z-axis direction to correspond to the concavely curved portion 211 and ribs 632 which protrude in the y-axis direction, are each disposed at four corners, and extend in a direction intersecting two adjacent sides, on the plate portion 631.

The reinforcing plate 623 is curved to correspond to the curvature of a curvature radius and thus is bonded to the concavely curved portion 211 by the plate portion 631. The ribs 632 extend in diagonal directions that intersect to form a diamond pattern. Each rib 632 a width W62 and extends along the curvature in the y-axis direction, thereby increasing the strength of the concavely curved portion 211.

The concavely curved portion 211 is applied with the action force to be stretched in the state in which the concavely curved portion 211 is curved by the internal pressure of the rechargeable battery and the strength distribution set at the concavely curved portion 211 by the reinforcing plate 623 may suppress the action force stretching the concavely curved portion 211. Therefore, the deformation of the concavely curved portion 211 in the event that the case 620 is inflated may be prevented.

Hereinafter, methods of bonding the reinforcing plate to the concavely curved portion of the case will be described. The reinforcing plates illustrated in the following embodiments of the present invention may be applied as one of the reinforcing plates illustrated in the first to fifth embodiments of the present invention but other reinforcing plates according to the invention may also be employed.

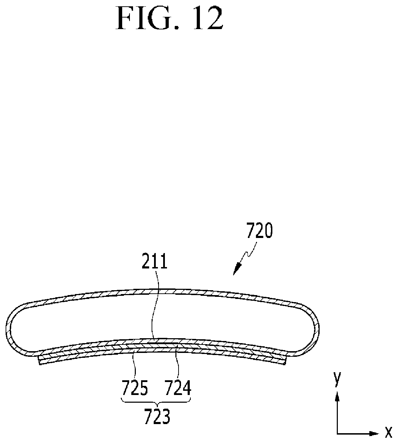

FIG. 12 is a transverse cross-sectional view of a case used in a rechargeable battery according to a sixth embodiment which is not according to the present invention. Referring to FIG. 12, a reinforcing plate 723 of a case 720 according to this embodiment of the present invention may be made of clad metal.

When the case 720 is made of aluminum, for example, the reinforcing plate 723 may include an aluminum layer 724 and a reinforcing layer 725. The clad metal is, in such a case, compressed to the concavely curved portion 211 of the case 720, such that the aluminum layer 724 is bonded to the concavely curved portion 211 in the state in which the reinforcing plate 723 includes the reinforcing layer 725.

Because the reinforcing plate 723 includes the aluminum layer 724 which is the same material as the case 720 it may be firmly bonded to the concavely curved portion 211, and separately includes the reinforcing layer 725 to variously select the strength of the concavely curved portion 211.

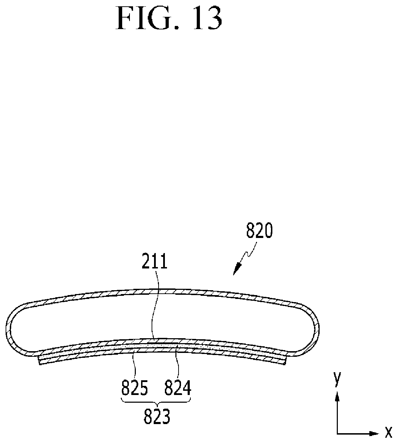

FIG. 13 is a transverse cross-sectional view of a case used in a rechargeable battery according to a seventh embodiment which is not according to the present invention. Referring to FIG. 13, according to this embodiment, a reinforcing plate 823 of a case 820 is formed as a laminate including a plurality of metal layers or a double-sided adhesive tape and thus is bonded to the xz plane. That is, the reinforcing plate 823 includes an adhesive layer 824 and a reinforcing layer 825. The laminate or the double-sided adhesive tape easily bonds the reinforcing plate 823 to the concavely curved portion 211 of the case 820.

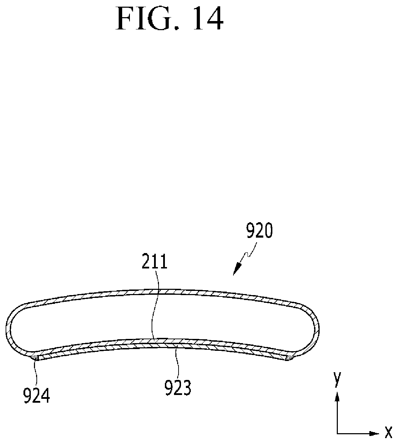

FIG. 14 is a transverse cross-sectional view of a case used in a rechargeable battery according to an eighth embodiment which is not according to the present invention. Referring to FIG. 14, according to this embodiment a reinforcing plate 923 of a case 920 is made of a synthetic resin and is bonded to the xz plane by hot melting injection. That is, when the case 920 and the reinforcing plate 923 are simultaneously injected by the hot melting, the reinforcing plate 923 is bonded to the concavely curved portion 211 of the case 920 at both ends 924 in the x-axis direction.

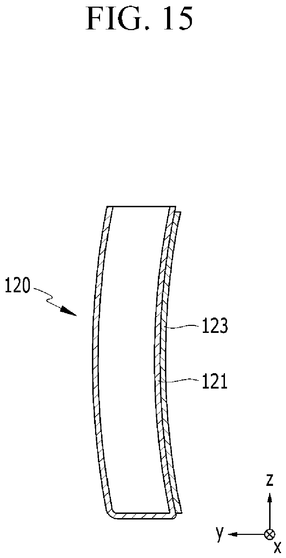

FIG. 15 is a longitudinal cross-sectional view of a case used in a rechargeable battery according to a ninth embodiment which is not according to the present invention. Referring to FIG. 15, a case 120 according to this embodiment is formed such that an xz plane is curved with the curvature radius in the y-axis direction, while forming a straight line in the x-axis direction. That is, the case 120 has a structure vertically curved in FIG. 15.

The cases 20, 220, 320, 420, 520, 620, 720, 820, and 920 according to the above example and the first to eighth embodiments are formed such that the xz planes are curved with the curvature radius in the y-axis direction, while forming a straight direction in the z-axis direction. That is, the cases 20, 220, 320, 420, 520, 620, 720, 820, and 920 have a structure horizontally curved in each drawing. However, the cases 20, 220, 320, 420, 520, 620, 720, 820, 920, and 120 may be curved vertically or horizontally or with a curvature oriented in a different direction.

Further, according to the ninth embodiment which is not according to the present invention, the reinforcing plate 123 is curved with the curvature radius in the y-axis direction and thus is bonded to the concavely curved portion 121. That is, the reinforcing members 203, 223, 323, 423, 523, 623, 723, 823, and 923 according to the above example and the first to eighth embodiments may alternatively be curved along the direction in which the case 120 according to the ninth embodiment of the present invention is curved, and thus may be applied to the concavely curved portion 121 of the case 120.

While this invention has been described in connection with what are presently considered to be practical embodiments, it is to be understood that the invention is not limited to the disclosed embodiments, but, on the contrary, is intended to cover various modifications and equivalent arrangements included within the scope of the appended claims.

## Claims

1. A rechargeable battery, comprising:
a case (20);
an electrode assembly (10) situated inside the case;
a cap plate (30) sealing an opening of the case; and
an electrode terminal (40) mounted at the cap plate (30) and electrically connected to the electrode assembly (10);
wherein the case (20) includes a first wall that extends in a first direction and comprises a first curved portion (211) that is curved in cross-section
**characterised in that** the rechargeable battery further comprises a reinforcing plate (203) bonded to the first curved portion (211), wherein the reinforcing plate (203) comprises a second curved portion that is curved in cross-section; and the second curved portion is coupled with the first curved portion (211);
further wherein the reinforcing plate (203) comprises a plurality of plate portions (231) and ribs (232) that project toward or away from the first curved portion (211), and the plate portions and the ribs are alternately provided.

2. A rechargeable battery according to claim 1, wherein the first curved portion (211) is concave.

3. A rechargeable battery according to claim 1 or 2, wherein the first curved portion (211) is curved in a plane that faces in the said first direction.

4. A rechargeable battery according to any preceding claim, wherein the first curved portion (211) is curved in a plane that faces perpendicular to the first direction.

5. A rechargeable battery according to any preceding claim, wherein at least some of the ribs (232) extend in the said first direction.

6. A rechargeable battery according to any preceding claim, wherein at least some of the ribs (232) extend in a direction that is substantially perpendicular to the said first direction.

7. A rechargeable battery according to any preceding claim, wherein at least some of the ribs (232) extend diagonally with respect to the said first direction.

8. A rechargeable battery according to any preceding claim, wherein the ribs (232) form a grid pattern.

9. A rechargeable battery according to any preceding claim, wherein at least some of the ribs (232) are substantially parallel to each other.

10. A rechargeable battery according to any preceding claim, wherein:
the case (20) comprises metal, and
the reinforcing plate (203) comprises a metal layer bonded to the first curved portion (211) and a reinforcing layer bonded to the metal layer.

11. A rechargeable battery according to one of claims 1 to 9, wherein the reinforcing plate (203) comprises a laminate or a double-sided adhesive tape.

12. A rechargeable battery according to one of claims 1 to 9, wherein the reinforcing plate (203) comprises a synthetic resin and is bonded to the first curved portion (211) by fusing or melt material.

13. A rechargeable battery according to any preceding claim, wherein:
the case (20) is stereometrically formed in a first direction, a second direction, and a third direction which intersect one another, and is formed such that the first wall is aligned in the first direction and curved with a radius aligned in the third direction.

14. A rechargeable battery according to claim 13, wherein:
the reinforcing plate (203) has a width set in the first direction and a height set in the second direction to correspond to the first wall and is curved with a radius aligned in the third direction.

## Patentansprüche

1. Wiederaufladbare Batterie, umfassend:
ein Gehäuse (20);
eine Elektrodenanordnung (10), die sich in dem Gehäuse befindet;
eine Deckelplatte (30), die eine Öffnung des Gehäuses abdichtet; und
einen Elektrodenanschluss (40), der auf der Deckelplatte (30) angebracht und mit der Elektrodenanordnung (10) elektrisch verbunden ist;
wobei das Gehäuse (20) eine erste Wand enthält, die sich in einer ersten Richtung erstreckt und einen ersten gekrümmten Abschnitt (211) umfasst, dessen Querschnitt gekrümmt ist,
**dadurch gekennzeichnet, dass** die wiederaufladbare Batterie ferner eine mit dem ersten gekrümmten Abschnitt (211) verbundene Verstärkungsplatte (203) umfasst, wobei die Verstärkungsplatte (203) einen zweiten gekrümmten Abschnitt umfasst, dessen Querschnitt gekrümmt ist; und der zweite gekrümmte Abschnitt mit dem ersten gekrümmten Abschnitt (211) gekoppelt ist;
wobei ferner die Verstärkungsplatte (203) eine Mehrzahl von Plattenabschnitten (231) und Rippen (232) umfasst, die in Richtung des ersten gekrümmten Abschnitts (211) oder in der Gegenrichtung hervorragen, und die Plattenabschnitte und Rippen abwechselnd bereitgestellt sind.

2. Wiederaufladbare Batterie nach Anspruch 1, wobei der erste gekrümmte Abschnitt (211) konkav ist.

3. Wiederaufladbare Batterie nach Anspruch 1 oder 2, wobei der erste gekrümmte Abschnitt (211) in einer Ebene gekrümmt ist, deren Fläche der ersten Richtung zugewandt ist.

4. Wiederaufladbare Batterie nach einem der vorhergehenden Ansprüche, wobei der erste gekrümmte Abschnitt (211) in einer Ebene gekrümmt ist, deren Fläche der Senkrechten zu der ersten Richtung zugewandt ist.

5. Wiederaufladbare Batterie nach einem der vorhergehenden Ansprüche, wobei sich zumindest einige der Rippen (232) in die erste Richtung erstrecken.

6. Wiederaufladbare Batterie nach einem der vorhergehenden Ansprüche, wobei sich zumindest einige der Rippen (232) in eine Richtung erstrecken, die im Wesentlichen senkrecht zu der ersten Richtung ist.

7. Wiederaufladbare Batterie nach einem der vorhergehenden Ansprüche, wobei sich zumindest einige der Rippen (232) diagonal in Bezug auf die erste Richtung erstrecken.

8. Wiederaufladbare Batterie nach einem der vorhergehenden Ansprüche, wobei die Rippen (232) ein Gittermuster bilden.

9. Wiederaufladbare Batterie nach einem der vorhergehenden Ansprüche, wobei zumindest einige der Rippen (232) im Wesentlichen parallel zueinander verlaufen.

10. Wiederaufladbare Batterie nach einem der vorhergehenden Ansprüche, wobei:
das Gehäuse (20) Metall umfasst und
die Verstärkungsplatte (203) eine mit dem ersten gekrümmten Abschnitt (211) verbundene Metallschicht und eine mit der Metallschicht verbundene Verstärkungsschicht umfasst.

11. Wiederaufladbare Batterie nach einem der Ansprüche 1 bis 9, wobei die Verstärkungsplatte (203) ein Laminat oder ein doppelseitiges Klebeband umfasst.

12. Wiederaufladbare Batterie nach einem der Ansprüche 1 bis 9, wobei die Verstärkungsplatte (203) ein Kunstharz umfasst und mit dem ersten gekrümmten Abschnitt (211) durch Verschmelzung oder Schmelzmaterial verbunden ist.

13. Wiederaufladbare Batterie nach einem der vorhergehenden Ansprüche, wobei:
das Gehäuse (20) stereometrisch in einer ersten Richtung, einer zweiten Richtung und einer dritten Richtung, die einander schneiden, so ausgebildet ist, dass die erste Wand in der ersten Richtung ausgerichtet und mit einem in der dritten Richtung ausgerichteten Radius gekrümmt ist.

14. Wiederaufladbare Batterie nach Anspruch 13, wobei:
die Verstärkungsplatte (203) in Entsprechung zu der ersten Wand eine Breite in der ersten Richtung und eine Höhe in der zweiten Richtung aufweist und mit einem in der dritten Richtung ausgerichteten Radius gekrümmt ist.

## Revendications

1. Batterie rechargeable, comprenant :
un boîtier (20) ;
un ensemble d'électrodes (10) situé à l'intérieur du boîtier ;
une plaque de capuchon (30) scellant une ouverture du boîtier ; et
une borne d'électrode (40) montée au niveau de la plaque de capuchon (30) et raccordée électriquement à l'ensemble d'électrodes (10) ;
dans laquelle le boîtier (20) comprend une première paroi qui s'étend dans une première direction et comprend une première partie incurvée (211) qui est incurvée en section transversale,
la batterie rechargeable étant **caractérisée en ce qu'**elle comprend en outre une plaque de renforcement (203) liée à la première partie incurvée (211), dans laquelle la plaque de renforcement (203) comprend une seconde partie incurvée qui est incurvée en section transversale ; et la seconde partie incurvée est couplée avec la première partie incurvée (211) ;
dans laquelle, en outre, la plaque de renforcement (203) comprend une pluralité de parties de plaque (231) et de nervures (232) qui font saillie vers ou à distance de la première partie incurvée (211), et les parties de plaque et les nervures sont prévues de manière alternée.

2. Batterie rechargeable selon la revendication 1, dans laquelle la première partie incurvée (211) est concave.

3. Batterie rechargeable selon la revendication 1 ou 2, dans laquelle la première partie incurvée (211) est incurvée dans un plan qui fait face à ladite première direction.

4. Batterie rechargeable selon l'une quelconque des revendications précédentes, dans laquelle la première partie incurvée (211) est incurvée dans un plan qui est orienté perpendiculairement à la première direction.

5. Batterie rechargeable selon l'une quelconque des revendications précédentes, dans laquelle au moins certaines des nervures (232) s'étendent dans ladite première direction.

6. Batterie rechargeable selon l'une quelconque des revendications précédentes, dans laquelle au moins certaines des nervures (232) s'étendent dans une direction qui est sensiblement perpendiculaire à ladite première direction.

7. Batterie rechargeable selon l'une quelconque des revendications précédentes, dans laquelle au moins certaines des nervures (232) s'étendent en diagonale par rapport à ladite première direction.

8. Batterie rechargeable selon l'une quelconque des revendications précédentes, dans laquelle les nervures (232) forment un modèle de grille.

9. Batterie rechargeable selon l'une quelconque des revendications précédentes, dans laquelle au moins certaines des nervures (232) sont sensiblement parallèles entre elles.

10. Batterie rechargeable selon l'une quelconque des revendications précédentes, dans laquelle :
le boîtier (20) comprend du métal, et
la plaque de renforcement (203) comprend une couche de métal liée à la première partie incurvée (211) et une couche de renforcement liée à la couche métallique.

11. Batterie rechargeable selon l'une des revendications 1 à 9, dans laquelle la plaque de renforcement (203) comprend un stratifié ou une bande adhésive double face.

12. Batterie rechargeable selon l'une des revendications 1 à 9, dans laquelle la plaque de renforcement (203) comprend une résine synthétique et est liée à la première partie incurvée (211) avec un matériau en fusion ou fondu.

13. Batterie rechargeable selon l'une quelconque des revendications précédentes, dans laquelle :
le boîtier (20) est formé de manière stéréométrique dans une première direction, une deuxième direction et une troisième direction qui se coupent, et est formé de sorte que la première paroi est alignée dans la première direction et incurvée avec un rayon aligné dans la troisième direction.

14. Batterie rechargeable selon la revendication 13, dans laquelle :
la plaque de renforcement (203) a une largeur définie dans la première direction et une hauteur définie dans la deuxième direction pour correspondre à la première paroi et est incurvée avec un rayon aligné dans la troisième direction.
